# EUROPEAN PATENT APPLICATION

(11) **EP 1 498 708 A1**
(43) Date of publication of application: **19.01.2005**
(21) Application number: 02720574.9
(22) Date of filing: 23.04.2002
(51) Int. Cl.: G01J 3/45, G01J 3/36

(54) **SMALL PACKAGED SPECTROSCOPIC SENSOR UNIT**

(71) Applicant: Maeda, Hiromu, Hamakita-shi, Shizuoka 434-0045 (JP); Mizuno, Toshihiro, Hamamatsu-shi, Shizuoka 431-3122 (JP)
(72) Inventor: Maeda, Hiromu, Hamakita-shi, Shizuoka 434-0045 (JP); Mizuno, Toshihiro, Hamamatsu-shi, Shizuoka 431-3122 (JP)
(74) Representative: Leson, Thomas Johannes Alois, Dipl.-Ing.
(86) International application number: PCT/JP2002/004036
(87) International publication number: WO 2003/091676

(57) **Abstract**

A small packaged spectroscopic sensor unit is provided which measures or inspects an interior quality or ingredient of an inspection object by introducing light having passed through the interior of the inspection object to an optical fiber and analyzes the light spectroscopically. In this sensor unit, the fiber bundle receives only a light beam of incident angle less than a prescribed angle, the fiber bundle is twisted together to disperse and uniformize the irregularity of the introduced light at the light-emitting end, and the optical fiber bundle is held by an arranging holder to shape the light-emitting face of the fiber bundle to fit the light-receiving face of a light diffuser and the light-receiving face of a photoelectric conversion element. The sensor unit has a light diffuser for diffuse-transmitting the light emitted from the light-emitting face of the optical fiber bundle, a continuous variable interference filter placed on the light-emitting face of the light diffuser, and a photoelectric conversion element after the continuous variable interference filter. The optical paths of the optical fiber bundle, light diffuser, and the continuous variable interference filter are aligned to be connected. The above members are sealed airtightly in a package.

## Description

### TECHNICAL FIELD

The present invention relates to a spectroscopic sensor unit of a spectroscope for nondestructive inspection of an object for an interior quality (including the ingredients) which is not evaluatable from external appearance: the inspection object includes agricultural products such as fruits, vegetables, and plant leaves; fish; meat; liquids such as cow milk, and alcoholic liquors; dairy products such as butter, and cheese. In particular, the present invention relates to a small-sized packaged spectroscopic sensor which is useful for constituting a spectroscopic instrument for nondestructive inspection occupying a very small space and can be installed on an object delivery line for on-line inspection, and which is useful for constituting a small-sized nondestructive inspection instrument operable by hand in any inspection site.

### BACKGROUND ART

For nondestructive inspection of an interior quality, a sugar content, an acidity, or the like of vegetables and fruits, an ingredient measurement instruments are used frequently which inspect or measure the interior component by projecting a light beam to the vegetable or fruit and measuring the transmitted light. For example, JP-A-3-160344 ("JP-A" herein means Japanese Patent Publication of unexamined application) discloses an instrument for vegetable-fruit ingredient measurement. Another known example, JP-A-11-183374, discloses an optical sensor unit for measuring a sugar content in a vegetable or a fruit. The aforementioned instrument for vegetable-fruit ingredient measurement shown in JP-A-3-1604344 is constituted such that a reflected light beam from the vegetable or fruit is received by a measurement head, the received light beam is introduced to a spectroscope having a mirror and a concave diffraction grating, the light fractions of different wavelength bands separated by the spectroscope are respectively converted photoelectrically by arrayed detectors, and the obtained electric signals are inputted to an arithmetic device to measure the ingredient content. The optical sensor disclosed in the aforementioned JP-A-11-183374 is constituted such that the reflected light from a measurement object is introduced through an optical fiber into a main instrument body case, the light released from the light-emitting end of the optical fiber is separated into spectral components by a concave diffraction grating and converted by an photoelectric converter to obtain electric signals, and the electric signals are treated by a data processing unit.

In the above instrument, the transmitted light or the reflected light from an object is introduced through an optical fiber to a spectroscope, separated into spectral components, and converted photoelectrically; and thereby the spectra is statistically analyzed to inspect the interior quality or ingredient of the object. In any of such instruments, light is separated by a mirror and a concave diffraction grating into light fractions of different wavelength bands, and is converted by a photoelectric conversion element into spectral output.

As mentioned above, any of the spectroscopes in the prior art techniques described in the patent publications employs a concave diffraction grating in the assemblage, so that the measuring device or the instrument body is inevitably larger in size. Further, in the spectroscope having a built-in concave diffraction grating, the optical. axis should be precisely aligned in fixing the concave diffraction grating. This fixation of the concave diffraction grating requires much labor and cost to increase the production cost of the spectroscope.

In the spectroscope having a built-in concave diffraction grating, the optical axes should be precisely aligned between the concave diffraction grating and the object at the light-receiving side and between the concave diffraction grating and the object at the reflection side. The optical axes are liable to be deviated by action of external impact or the like shock due to certain interspaces at the connecting portions of the light-emitting end of the optical fiber, the reflection mirror, the concave diffraction grating, and the photoelectric converter. Therefore, the spectroscope is insufficient in mechanical strength and durability, disadvantageously.

The light reflection is liable to vary depending on minute displacement of the constituting members resulting from thermal expansion or contraction caused by environmental temperature variation. This causes inconsistency in the relation between the photoelectric output and the wavelength to impair the spectroscopic measurement precision. Therefore, the conventional spectroscopes are insufficient in impact resistance (shock resistance), so that the measurement instruments employing the spectroscope cannot readily be made portable (transportable) entirely, and are usually handled in a testing room not suitable for the environmental temperature variation is less.

In using a portable measurement instrument for ingredient inspection or quality inspection of vegetables, fruits, or the like in the outdoors, preferably the operator holds the measurement object on one hand, and handles the measurement instrument with the other hand. Actually, however, the conventional instrument, as described above on the aforementioned prior art techniques, has the measurement head and the main instrument body (spectroscope unit) separated from each other. Therefore, it is difficult to handle the instrument by carrying the main instrument body for efficient inspection.

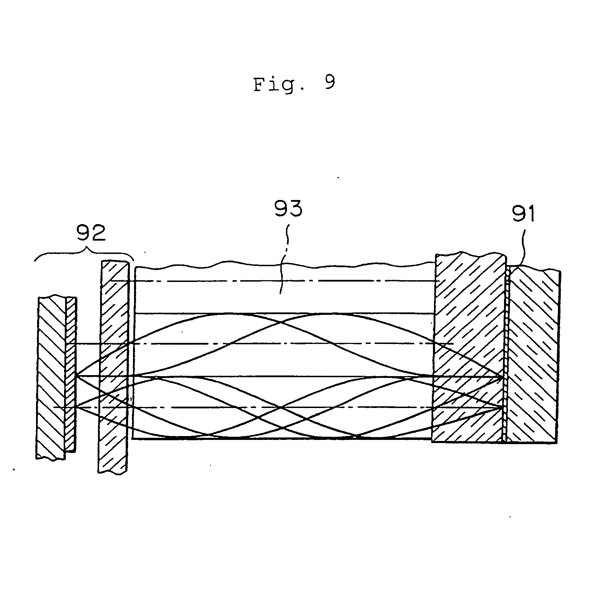

A compact spectroscope without a diffraction grating is disclosed in U.S. Patent 6,057,925 as a colorimetric sensor assembly for optical measurement of color contents by wavelength spectra. This known spectroscope, as shown in Fig. 9, employs an LVF (continuous variable interference filter) 91, a detector array 92, and a microlens array 93 therebetween to project an image on the light-sensitive face of the detector array 92. This instrument is useful as a spectroscope instrument like a colorimeter.

Specifically, in the spectroscope, the light from the LVF 91 is focused through the microlens array 93 on the image chip light-sensitive face of the detector 92. A transparent cover (light-transmissive cover) or an interspace is provided respectively between the LVF 91 and the microlens array 93 and between the microlens array 93 and the detector array 92 to focus the lenses. As the result, it is difficult to focus the lenses respectively to all of the image chip centers of the detector array 92 to cause nonuniformity by deviation of focusing position from the center of the respective image chips or image blurring to result in inaccuracy of the detector output and lack of spectral accuracy, disadvantageously.

Such a spectroscope is really useful as a colorimeter which measures colors by combination of a larger wavelength breadth of light for the human spectral luminous efficiency according to the RGB colorimetric system. However, this spectroscope is not useful for nondestructive inspection of the interior quality or interior ingredient of the inspection object such as vegetables, fish, and meats with high resolution.

The present invention has been accomplished in view of the above fact. The present invention intends to provide a small-sized high-precision packaged spectroscopic sensor unit as a spectroscopic means having higher mechanical strength and higher shock-resistance, useful for nondestructive inspection, by spectroscopy, of an interior quality or an ingredient of an inspection object (including agricultural products such as fruits, vegetables, and plant leaves; fish; meat; liquids such as cow milk, oils, and alcoholic beverages; dairy products such as butter and cheese; other foodstuffs; and biological samples): the small packaged spectroscopic sensor unit has no interspace of a certain size in the interior, no reflection mirror and no diffraction grating, and no interspace in the optical path.

The present invention intends also to provide a small-sized packaged sensor unit capable of inspecting spectroscopically the interior quality or interior ingredient of various inspection objects having characteristics in a relatively short near-infrared wavelength region of 1100 nm or less and having characteristics only in the near to medium infrared wavelength region of 1000 nm or more.

The present invention intends further to provide a small-sized packaged sensor unit which has plural light-receiving faces of photoelectric conversion element and is thereby capable of giving output sufficient for spectroscopy even with an inspection object giving a minute light quantity of transmitted light having information of the interior component.

### DISCLOSURE OF THE INVENTION

For achieving the above objects, claim 1 of the present invention discloses a small packaged spectroscopic sensor unit of an instrument. This sensor unit receives, through an optical fiber bundle, light emitted from an inspection light source and diffuse-transmitted through an inspection object, separates the received light spectroscopically into spectra, and inspects the spectra by an array type sensor for the interior quality of the inspection object,
wherein a light diffuser, continuous variable interference filter and a photoelectric conversion element are provided after the optical fiber bundle;
an end of the optical fiber bundle as a light-receiving face receives a part of the diffuse-transmitted light at incident angles smaller than a prescribed angle relative to the center line of the optical fiber excluding the light of incident angle larger than the prescribed angle; fibers of the optical fiber bundle are twisted together in a uniform layer thickness to disperse and uniformize irregularity in the received light at the light-emitting end;
the light-emitting end of the optical fiber bundle is arranged and held by an arranging holder in the same shape as the light-receiving face of the light diffuser and the light receiving face of the photoelectric conversion element;
the light diffuser is provided for diffuse-transmitting the light from the light-emitting face of the optical fiber bundle,
the continuous variable interference filter is provided at the light-emitting face of the light diffuser,
the photoelectric conversion element is provided after the continuous variable interference filter; and
the optical fiber bundle, the light diffuser, and the continuous variable interference filter are aligned to have a common optical path, and housed airtightly and fixed in a package.

In a preferred embodiment of the present invention set forth in claim 2, the packaged spectrometric sensor unit has a double-package structure in which the optical fiber bundle is branched into two, and two arranging holders for arranging and holding the light-emitting end of the optical fiber bundle in a prescribed shape respectively form a light-emitting face to fit in size to two kinds of photoelectric conversion elements capable of measuring different wavelength band regions; and a light diffuser, a continuous variable interference filter, and a photoelectric conversion element are provided for each of the light-emitting faces.

In a preferred embodiment of the present invention set forth in claim 3, the light-receiving end of the optical fiber bundle is branched into two to form two light-receiving faces for receiving internal diffused light from two different positions of the inspection object,
the fiber bundle branches are twisted together between the light-receiving face and the light-emitting face into one optical fiber bundle to emit the light uniformly throughout the light-emitting end, and the light-emitting face is held in a prescribed shape.

In a preferred embodiment of the present invention set forth in claim 4, a positioning means is provided which aligns the arranging holder for arranging and holding the light-emitting end in a prescribed shape and the diffuser holder for holding the light diffuser to connect the optical paths of the holders.

In a preferred embodiment of the present invention set forth in claim 5, the light diffuser is constituted of optical glass which diffuse-reflects therein the light introduced from the light-emitting face of the optical fiber bundle and emits the light from the light-emitting face on the side opposite to the light-receiving face toward the continuous variable interference filter.

In a preferred embodiment of the present invention set forth in claim 6, the continuous variable interference filter is formed by ion-assisted vapor deposition directly on the light emitting face of the light diffuser.

In a preferred embodiment of the present invention set forth in claim 7, the continuous variable interference filter is formed by ion-assisted vapor deposition on a surface of a thin optical glass plate having the same quality as the light diffuser for diffuse-reflecting and transmitting the light therein, and the reverse face of the thin optical glass plate is bonded by a light-transmissive adhesive to the light-emitting face of the light diffuser in integration.

In a preferred embodiment of the present invention set forth in claim 8, the continuous variable interference filter is formed by ion-assisted vapor deposition on a surface of a light-transmissive film, and is in close contact with the light-emitting face of the light diffuser.

In a preferred embodiment of the present invention, the photoelectric conversion element employing a silicon array sensor is combinedly used with the continuous variable interference filter serving to separate the light into spectra by the wavelength in the range from a short wavelength of 400 nm to a long wavelength of 1100 nm.

In a preferred embodiment of the present invention, the photoelectric sensor employing an indium-gallium-arsine array sensor is combinedly used with the continuous variable interference filter serving to separate the light into spectra by the wavelength in the range from a short wave length of 1000 nm to a long wavelength of 2600 nm in accordance with the light receiving characteristics of the indium-gallium-arsine array sensor. For measurement in the long wavelength range of 2000-5500 nm, the indium-gallium-arsine array sensor is used with cooling in combination with a continuous variable interference filter for spectroscopic separation of light of 2000-5500 nm.

In a preferred embodiment of the present invention, combination of the above silicon array sensor of the photoelectric conversion element and the continuous variable array sensor, or combination of the indium-gallium-arsine array sensor or the indium-antimony array sensor and the continuous variable interference filter are respectively constituted in a linear type or an area type.

In a preferred embodiment of the present invention set forth in claims 15-17, the two combinations of the photoelectric conversion element and the continuous variable interference filter are employed respectively for the branched fiber bundles: one is a combination of a silicon array sensor with a continuous variable interference filter allowing the light of wavelength of 600-1100 nm to pass, and the other is a combination of an indium-gallium-arsine array sensor with a continuous variable interference filter allowing the light of wavelength of 1000-2600 nm corresponding to the light-receiving characteristics of the indium-gallium-arsine array sensor, or a combination of an indium-antimony array sensor with a continuous variable interference sensor allowing the light of wavelength of 2000-5500 nm.

In a preferred embodiment of the present invention set forth in claim 18, one photoelectric conversion element of the two combinations employs a linear type silicon array sensor, and the other photoelectric conversion element employs an area type indium-gallium-arsine array sensor or an area type indium-antimony array sensor.

In a preferred embodiment of the present invention set forth in claim 19, the optical path is formed in close contact without interspace between the light-emitting face of the optical fiber bundle and the opposing face of the light diffuser and between the opposing faces of the light diffuser and the continuous variable interference filter.

In a preferred embodiment of the present invention set forth in claim 20, the light-receiving face of the photoelectric conversion element is brought as near as possible to the continuous variable interference filter and fixed in the package.

In the small packaged spectroscopic sensor unit of the present invention having the aforementioned constitution, entrance of diffused light from the inspection object at an incident angle larger than a prescribed angle is shut out by the optical fiber bundle to exclude external disturbing light.

In the light-emitting end portion of the optical fiber bundle, the optical fibers are twisted together, and the light-emitting face is formed to fit the shape of the light-receiving face of the photoelectric conversion element. Therefore, deviation or irregularity of the light introduced the light-receiving face of the optical fiber bundle is dispersed to emit uniform light from the light-emitting face without deviation or irregularity. Thus any local deviation or irregularity of the light received from the surface of the inspection object or influence of a foreign matter is dispersed.

The light diffuser having the end portion fitted to the light-emitting face of the optical fiber bundle serves to diffuse the received light therein and to emit the light uniformly from the light-emitting face. That is, the light diffuser serves like an integral sphere to diffuse the light.

The continuous variable interference filter is placed in opposition to the light-emitting face of the light diffuser which emits diffused light uniformly. This continuous variable interference filter serves to filter selectively the light and separate the light into spectra in a range from a short wavelength to a long wavelength.

The continuous variable interference filter provided in opposition to the light-emitting face of the light diffuser is formed to fit the shape of the light-receiving face of the photoelectric conversion element, and the filter is brought as near as possible to the light-receiving face. Therefore, the spectroscopically separated light is introduced without external influence or disturbance to the light-receiving face of the photoelectric conversion element to obtain output signals in correspondence with the wavelengths.

The arranging holder for the optical fiber bundle at the light-emitting side, the light diffuser holder, and the photoelectric conversion element are fixed and housed airtightly by fixing means such as pressing screws and a pressing plate in the housing case. Thereby the precision of the spectroscopic separation can be kept stable without external influence. This sensor is useful as spectroscopic measurement sensors in various application fields.

In another embodiment, the optical fiber bundle of the sensor unit is branched into two at the light-emitting side. The one branch of the optical fiber bundle is combined with a silicon array sensor having light-receiving sensitivity at the wavelength range of 600-1100 nm, and the other branch is combined with an indium-gallium-arsine array sensor having a light-receiving sensitivity at the wavelength range of 1000-2600 nm or an indium-antimony array sensor having a light-receiving sensitivity at the wavelength range of 2000-5500 nm. Thereby, the light of wavelength of longer than 1100 nm which cannot be detected by single use of a silicon array sensor can be converted photoelectrically to obtain corresponding signals, whereby the application fields of the sensor unit can be extended.

In other words, single use of a silicon array sensor can analyze spectroscopically the light only within the light-receiving sensitivity of the silicon array (shorter than 1100 nm), so that the application fields or the inspection objects thereof are limited. However, the combination of the indium-gallium-arsine array sensor or the indium-antimony array sensor therewith enables inspection of objects having quality information in the wavelength bands of longer than 1100 nm.

A photoelectric conversion element having an area type constitution is capable of receiving spectroscopically separated light fractions simultaneously by plural light-receiving elements arranged parallelly in plural lines, and the output signals can be collected for the respective wavelength fractions, facilitating inspection of objects which gives only weak light transmission.

### BRIEF DESCRIPTION OF THE DRAWINGS

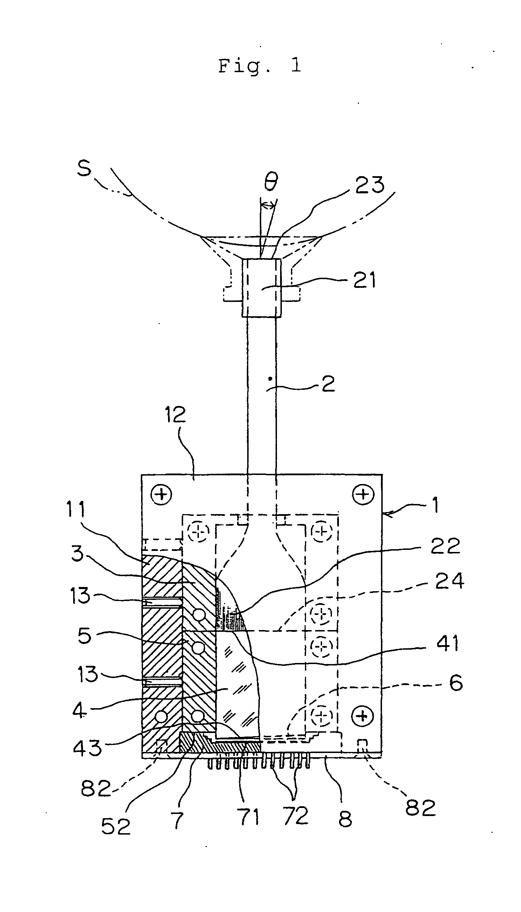

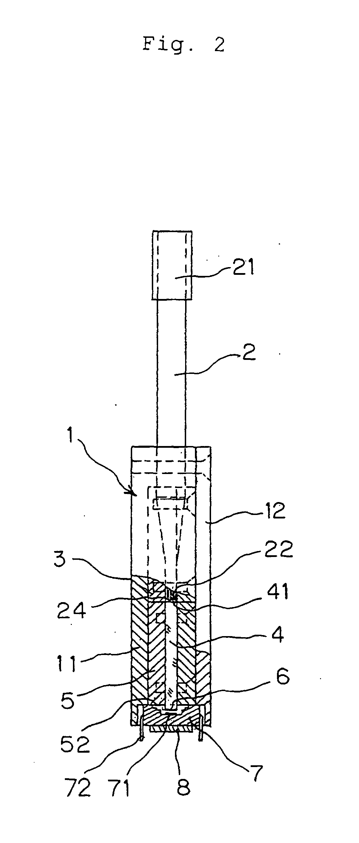

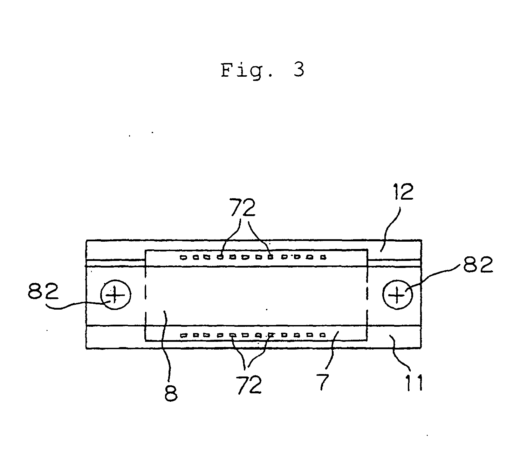

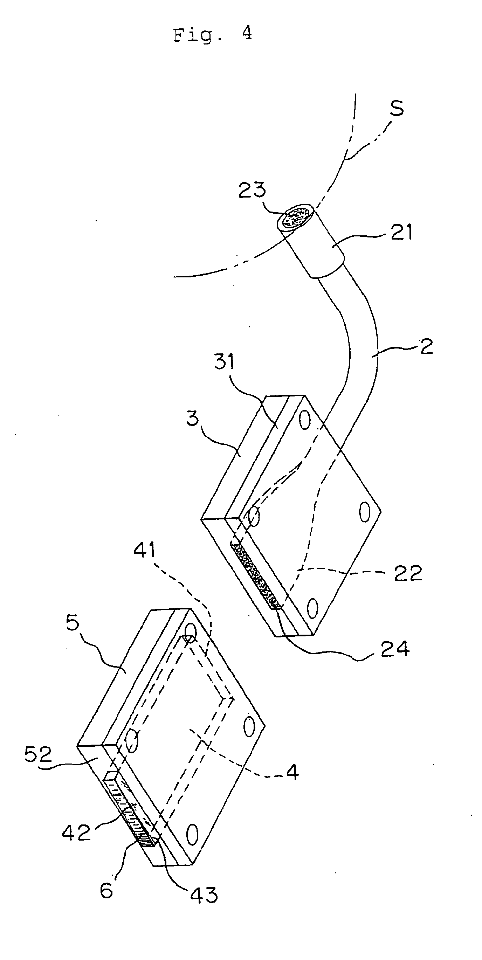

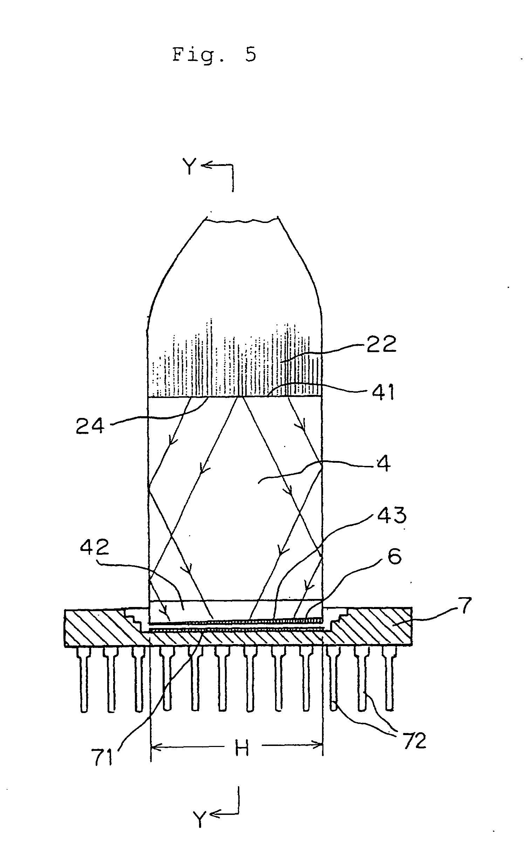

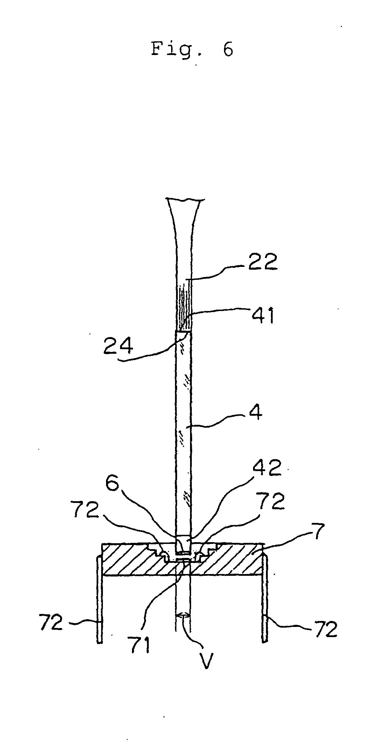

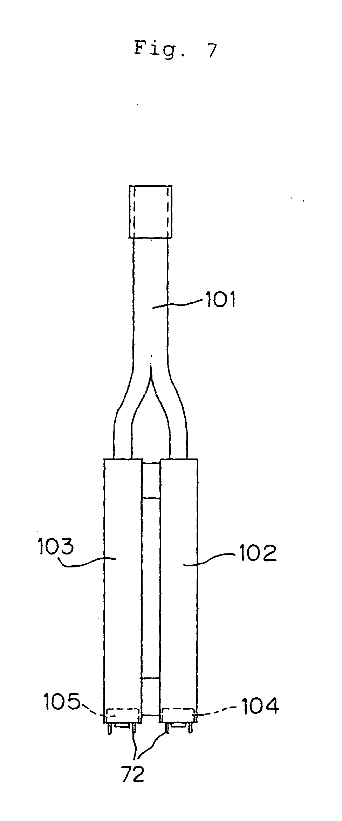

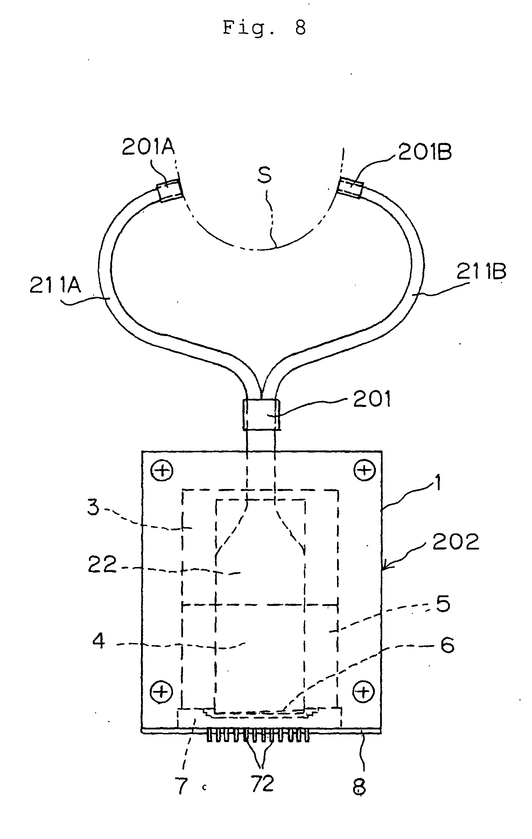

Fig. 1 is a plan view of an example of the small-sized packaged spectroscopic sensor unit of the present invention with a main portion broken away. Fig.2 is a lateral view of the example of the small-sized packaged spectroscopic sensor unit of the present invention with a main portion broken away. Fig. 3 is a lateral view of an output terminal side of an example of the small-sized packaged spectroscopic sensor unit of the present invention. Fig. 4 is a perspective view of a disassembled main portion of the unit of the present invention. Fig. 5 is a sectional view showing the detailed construction of the main portion of the unit of the present invention. Fig. 6 is a sectional view taken along the line Y-Y in Fig. 5. Fig. 7 is a lateral view of another example of the small-sized packaged spectroscopic sensor unit employing two kinds of arrayed sensors. Fig. 8 is a plan view of still another example of the unit of the present invention in which the light introducing end of the fiber bundle is branched into two. Fig. 9 is a drawing for explaining a conventional compact spectroscope.

### BEST MODE FOR CARRYING OUT THE INVENTION

A first example of the present invention is explained below in detail by reference to Figs. 1-6.

The numeral 1 denotes a package. This package 1 is constituted of a housing case 11 and a cap 12. In the package 1, there are an arranging holder 3 for arranging and holding the light-emitting end 22 of the optical fiber bundle 2 in a prescribed shape; a light diffuser holder 5 for holding a light diffuser 4 for diffusing and transmitting the light from the light-emitting face 24 of the light-emitting end 22 of the optical fiber 2; and a photoelectric converting element 7 for receiving the light fractions separated by wavelength by a continuous variable interfering filter 6 provided on the light-emitting end face 43 of the light diffuser 4, placed in the named order.

The optical fiber bundle 2 is made by bundling a number of fine optical fibers having characteristics of receiving and transmitting only the light beams of incident angles of not larger than a prescribed angle θ and excluding light beams of a larger incident angle than θ. Preferably the above incident angle θ of the optical fiber is 15°. Such an optical fiber can constitute a light receiving end 21 having high directivity to the light diffused and transmitted through the inside of the inspection object S.

In the drawings illustrating this example, the light-receiving end 21 is bound and consolidated into one. However, depending on the usage, the light-receiving end 21 may be divided into two or more branches as described later. The optical fiber bundle 2 constituted of a number of fine optical fibers is twisted together such that the light beams received adjacently at the light-receiving end 21 are diffused and mixed together at the light emitting end 22 to be emitted out of the light-emitting end face 24 nearly uniformly. The light-emitting end 22 of the optical fiber bundle is held by an arranging holder 3 in a prescribed shape and is fixed by a pressing cap 31.

More specifically, in the fiber bundle, a number of the optical fibers are twisted together into a non-imaging optical fiber bundle so that local irregularity of intensity or deviation of the introduced light from the light-receiving face 23 is diffused uniformly at the light-emitting end 22 of the optical fiber bundle 2, and emitted uniformly from the light-emitting face 24. The shape of the light-emitting end 22 of the optical fiber bundle 2 is determined to meet the length H and the breadth V of the light-receiving face 71 of the photoelectric conversion element 7, together with a light diffuser 4 and a continuous variable interference filter 6 connected later.

The light diffuser 4 employs optical glass having a high light-transmissivity, and is positioned in a light diffuser holder 5 so that the light-receiving face 41 thereof may be in close contact with light-emitting face 24 of the aforementioned optical fiber bundle 2, and is fixed by a pressing cap 51. The optical glass is preferably composed of a material for optical lenses (borosilicate glass), and is optically polished at the peripheral face to allow the introduced light to diffuse by internal reflection and reach the light-emitting face 43.

This light diffuser 4 functions like an integrating sphere to diffuse-reflecting the light therein uniformly and to emit the diffuse-reflected light.

A continuous variable interference filter 6 is formed on the light-emitting end face 43 of the light diffuser 4 by ion-assisted vapor deposition to separate the light into fractions ranging from a short wavelength to a long wavelength (e.g., 400-1100 nm) by wavelengths.

The light diffuser 4 onto which the continuous variable interference filter 6 is to be formed by ion-assisted vapor deposition has a large length between the light-receiving face 41 and the light-emitting face 43. Owing to the large length, the vapor deposition cannot readily be conducted generally. For facilitating the vapor deposition, the light-emitting end portion of the light diffuser 4 is divided to obtain a thin diffuser portion 42 of a certain thickness as shown in Fig 5. The ion-assisted vapor deposition is conducted on the light-emitting face 43 of this thin diffuser portion 42.

In this case, the thin diffuser portion 42 having the continuous variable interference filter 6 formed thereon by ion-assisted vapor deposition is bonded to the main portion of the light diffuser 4 by an optical transmissive adhesive in integration.

The light-emitting face 43 of the light diffuser 4 formed as above is allowed to protrude by a prescribed length from the end face 52 of the light diffuser holder 5 in order to bring the continuous variable interference filter 6 as near as possible to the light-receiving element face 71 of the photoelectric conversion element 7. In other words, the length of the light diffuser 4 between the light-receiving face 41 and the light-emitting face 43 is made larger by a certain dimension than the length of the light diffuser holder 5, and the continuous variable interference filter 6 is provided on the protruding light-emitting end face 43.

In another example not shown in the drawings, the continuous variable interference filter 6 may be a thin plate like a transparent film, which may be bonded to the light-emitting face 43 by a light-transmissive adhesive.

The photoelectric conversion element 7 is bared without a window glass or a like cover on the light-receiving side, and the bared surface 71 of the light-receiving element is dented by a prescribed depth.

Thus, the light-receiving face of the photoelectric conversion element 7 is confronted to the end face 52 of the light diffuser holder 5 as closely as possible without direct contact of the continuous variable interference filter 6 with the light-receiving element surface 71.

The light-emitting face 43 of the light diffuser 4 and the continuous variable interference filter 6 have respectively the length H and the breadth V in the same dimension as those of the light-receiving face 71 of the photoelectric conversion element 7.

Thereby the above continuous variable interference filter 6 does not come into contact with the bonding wires 72 formed on the lateral side of the light-receiving element face 71.

The small packaged spectroscopic sensor unit is assembled as follows: the arranging holder 3 for the optical fiber bundle 2, the light diffuser holder 5 holding the light diffuser 4, the continuous variable interference filter 6, and the photoelectric conversion element 7 are allowed to confront successively with the optical paths aligned in the housing case 11; a pressing plate 8 is placed between the terminal pins 72 protruding from the back side of the photoelectric conversion element 7 to the both sides; this pressing plate is fixed by fixing screws 82 to the housing case 11, and a cap 12 is set onto the housing case 11 to close tightly the housing case 11.

Incidentally, the numeral 13 in Fig. 1 denotes fixing screws for fixing the arranging holder 3 and the light diffuser holder 5 from the sides to the housing case 11, the screw serving also as a position-adjusting screw for aligning the optical paths of the light-emitting face 24 of the optical fiber bundle 2 and of the light-receiving face 41 of the light diffuser 4.

Next, a second example is explained by reference to Fig. 7. In Fig. 7, the light-emitting side of an optical fiber bundle 101 is divided into two branches, and to the respective ends thereof, two packages, namely a package A 102 and another package B 103, are connected.

The package A 102 and the package B 103 have the same internal constitution as the one of the first example. The package A 102 and the package B 103 have respectively a continuous variable interference filter effective in a different spectroscopic wavelength range and photoelectric conversion elements 104 and 105 corresponding to the respective spectroscopic wavelength ranges. The internal constitution of the packages A 102 and B 103 are similar to the one of the first example. Therefore the description of the internal constitution is omitted.

In this second example, the package A 102 has a continuous variable interference filter for filtering the light of the wavelength of 400-1100 nm to form spectra and a photoelectric conversion element 104 employing a silicon array sensor in combination; and the other package B 103 has a continuous variable interference filter for filtering the light of wavelength of 1000-1800 nm to form spectra changing linearly with the wavelength and a photoelectric conversion element 105 employing an indium-gallium-arsine array sensor in combination.

The unit of the second example is useful for spectroscopic inspection of an interior quality of an inspection object by utilizing both a portion of light of a short wavelength range of not longer than 1000 nm and a portion of light of a long wavelength range of not shorter than 1100 nm of the transmitted light.

The photoelectric conversion element 104 of the package A 102 employing a silicon array sensor has light receiving sensitivity in the wavelength range of 400-1100 nm, but is not sensitive to the longer wavelength of light exceeding 1100 nm. On the other hand, the photoelectric conversion element 105 of the package B 103 employing an indium-gallium-arsine array sensor has light receiving sensitivity in the wavelength range of 1000-1800 nm, but is not sensitive to the shorter wavelength of light below 1000 nm.

Therefore, the transmitted light from the inspection object is introduced to the one optical fiber bundle 101, the introduced light is dispersed by twisting the optical fibers to remove irregularity of the light, thereafter the optical fiber bundle is branched, and the branched light portions are respectively introduced to the package A 102 and the package B 103.

The photoelectric conversion element 105 employing the indium-gallium-arsine array sensor is cooled electronically by a Peltier element incorporated.

In the example, the spectroscopic wavelength range of the package B 103 is shown to be 900-1800 nm. However, this is an example employing an indium-gallium-arsine as the light-receiving element of the photoelectric conversion element 105, and does not limit the present invention. An indium-gallium-arsine array sensor which has light-receiving sensitivity in the range of 1200-2600 nm may be used.

In place of the indium-gallium-arsine array sensor, photoelectric conversion element sensitive to a longer wavelength of light of up to 2600 nm, or up to 5500 nm may be used. For example, an indium-antimony element may be used by cooling below 0°C.

The combination of two packages different in the spectroscopic separation wavelength range can give a sensor unit capable of spectroscopic analysis of the interior quality and ingredient in a broader range of inspection objects S.

Next, a third example is explained by reference to Fig. 8. The unit of Fig. 8 has an optical fiber bundle 201 divided into two branches having a light-receiving end 211A and a light-receiving end 211B. This unit is used for spectroscopic analysis in which the light diffuse-transmitted from the interior of an inspection object S is taken out from plural positions on the surface of the inspection object S.

In this third example, fiber bundles having the light receiving ends 211A and 211B for contact with different positions of the inspection object S are combined into one fiber bundle 201, and are twisted to cancel irregularity of the light in the package 202.

The internal constitution of the package 202 is the same as that in the first and second examples, so that the detailed explanation is omitted. With this unit, the light-receiving face 201A of the light-receiving end 211A and the light-receiving face 201B of the light-receiving end 211B are brought into contact with the inspection object S at the opposite sides to receive the light transmitted to the surface. Therefore, even if the quality or the ingredient deviates or is irregular at the positions of the inspection object, the deviation or irregularity is averaged by analyzing spectroscopically the uniformly dispersed or mixed light fluxes received at the two sides.

For example, in fruits as the inspection object S, the sugar content or the acidity may be different or deviates between the sunlight-receiving side and the shaded side. In a peach, for example, the difference of the sugar content can reach about 5%. With the above instrument, an averaged sugar content can be measured.

### INDUSTRIAL APPLICABILITY

As described above, the small packaged spectroscopic sensor unit of the present invention comprises an optical fiber bundle, a light diffuser, a continuous variable interference filter, and a photoelectric conversion element housed airtightly in a housing case, wherein an optical fiber bundle uniformizes irregularity of the received light at the light-emitting end arranged in conformity with the dimension and size of the light diffuser; the light diffuser and the continuous variable interference filter are brought into contact in the named order with the light-emitting face of the optical fiber bundle to separate the light spectroscopically by wavelength; and the light-receiving face of the photoelectric conversion element is brought as near as possible to the continuous variable interference filter.

The spectroscopic sensor unit of the present invention has the sensor-constituting parts being fixed in the housing case. Therefore, the sensor unit will not cause abnormality such as deviation and wavelength aberration even when it is subjected to an external impact, and will not be affected by environmental conditions, advantageously.

In the spectroscopic senor unit of the present invention, any irregularity in the transmitted light introduced to the light-receiving face at the light-receiving end of the optical fiber bundle is dispersed uniformly at the light-emitting end thereof and further uniformized by diffuse reflection in the light diffuser, and the uniformized light is separated into spectra. Thereby, an average quality of the inspection object can be measured or inspected.

The continuous variable interference filter is brought as near as possible to the light-receiving face of the photoelectric conversion element. Therefore the spectroscopically separated light is converted photoelectrically without diffusion or dispersion, giving a measurement value or inspection value stably with high precision.

The small-sized packaged spectroscopic sensor unit can be made in an external dimension (size) of as small as a 20-cigarette packet, for example, or smaller to be holdable by a palm. Therefore, the sensor unit is handy to carry and is useful as a portable light-weight inspection instrument.

The small-sized packaged spectroscopic sensor unit of claim 2 is constituted of a double-package structure containing two photoelectric conversion elements for different light-receiving wavelength bands. Thereby measurement and inspection of internal ingredient or quality can be conducted over a wide range with various inspection objects.

## Claims

1. A small packaged spectroscopic sensor unit of an instrument which receives, through an optical fiber bundle, light emitted from an inspection light source and diffuse-transmitted through an inspection object, separates the received light spectroscopically into spectra, and inspects the spectra by an array type sensor for the interior quality of the inspection object, wherein
an end of the optical fiber bundle as a light-receiving face receives a part of the diffuse-transmitted light at incident angles smaller than a prescribed angle relative to the center line of the optical fiber excluding the light of incident angle larger than the prescribed angle;
fibers of the optical fiber bundle are twisted together in a uniform layer thickness to disperse and uniformize irregularity in the received light at the light-emitting end;
the light-emitting end of the optical fiber bundle is arranged and held by an arranging holder in the same shape as the light-receiving face of a light diffuser and the light receiving face of a photoelectric conversion element; a light diffuser is provided for diffuse-transmitting the light from the light-emitting face of the optical fiber bundle,
a continuous variable interference filter is provided at the light-emitting face of the light diffuser,
a photoelectric conversion element is provided after the continuous variable interference filter; and
the optical fiber bundle, the light diffuser, and the continuous variable interference filter are aligned to have a common optical path, and housed airtightly and fixed in a package.

2. The small packaged spectroscopic sensor unit according to claim 1, wherein the packaged spectrometric sensor unit has a double-package structure in which the optical fiber bundle is branched into two, and two arranging holders for arranging and holding the light-emitting ends of the optical fiber bundle in a prescribed shape respectively form a light-emitting face to fit in size to each of two kinds of photoelectric conversion elements capable of measuring different wavelength band regions; and a light diffuser, a continuous variable interference filter, and a photoelectric conversion element are provided for each of the light-emitting faces.

3. The small packaged spectroscopic sensor unit according to claim 1 or 2, wherein the light-receiving end of the optical fiber bundle is branched into two to form two light-receiving faces for receiving internal diffused light from two different positions of the inspection object, the fiber bundle branches are twisted together between the light-receiving face and the light-emitting face into one optical fiber bundle to emit the light uniformly throughout the light-emitting end, and the light-emitting face is held in a prescribed shape.

4. The small packaged spectroscopic sensor unit according to claim 1, 2, or 3, wherein a positioning means is provided which aligns the arranging holder for arranging and holding the light-emitting end in a prescribed shape and the diffuser holder for holding the light diffuser to connect the optical paths of the holders.

5. The small packaged spectroscopic sensor unit according to claim 1, 2, or 3, wherein the light diffuser is constituted of optical glass which diffuse-reflects therein the light introduced from the light-emitting face of the optical fiber and emits the light from the light-emitting face on the side opposite to the light-receiving face toward the continuous variable interference filter.

6. The small packaged spectroscopic sensor unit according to claim 1, 2, 3, or 5, wherein the continuous variable interference filter is formed by ion-assisted vapor deposition directly on the light-emitting face of the light diffuser.

7. The small packaged spectroscopic sensor unit according to claim 1, 2, 3, 5, or 6, wherein the continuous variable interference filter is formed by ion-assisted vapor deposition on a surface of a thin optical glass plate having the same quality as the light diffuser for diffuse-reflecting and transmitting the light therein, and the reverse face of the thin optical glass plate is bonded by a light-transmissive adhesive to the light-emitting face of the light diffuser in integration.

8. The small packaged spectroscopic sensor unit according to claim 1, 2, 3, 5, or 6, wherein the continuous variable interference filter is formed by ion-assisted vapor deposition on a surface of a light-transmissive film, and is in close contact with the light-emitting face of the light diffuser.

9. The small packaged spectroscopic sensor unit according to claim 1, 3, 6, 7, or 8, wherein the photoelectric conversion element employs a silicon array sensor, and the continuous variable interference filter combined therewith serves to separate the light into spectra by wavelength in the range from a short wavelength of 400 nm to a long wavelength of 1100 nm.

10. The small packaged spectroscopic sensor unit according to claim 1, 3, 6, 7, 8, or 9, wherein the silicon array sensor and the continuous variable interference filter is constituted in a linear type.

11. The small packaged spectroscopic sensor unit according to claim 1, 3, 6, 7, 8, or 9, wherein the silicon array sensor and the continuous variable interference filter is constituted in an area type.

12. The small packaged spectroscopic sensor unit according to claim 1, 3, 6, 7, or 8, wherein the photoelectric conversion element employs array sensor of indium-gallium-arsine, or indium-antimony, and the continuous variable interference filter combined therewith serves to separate the light into spectra by the wavelength in the range from a short wavelength of 1000 nm to 5500 nm.

13. The small packaged spectroscopic sensor unit according to claim 1, 3, 6, 7, 8, or 12, wherein the array sensor of indium-gallium-arsine or indium-antimony and the continuous variable interference filter is constituted in a linear type.

14. The small packaged spectroscopic sensor unit according to claim 1, 3, 6, 7, 8, or 12, wherein the array sensor of indium-gallium-arsine or indium-antimony and the continuous variable interference filter is constituted in a area type.

15. The small packaged spectroscopic sensor unit according to claim 2, 6, 7, or 8, wherein, of the two combinations of the photoelectric conversion element and the continuous variable interference filter corresponding to each of the branched fiber bundles,
one is a combination of a silicon array sensor with a continuous variable interference filter allowing the light of wavelength of 600-1100 nm to pass, and the other is a combination of an array sensor of indium-gallium-arsine or indium-antimony with a continuous variable interference filter allowing the light of wavelength of 1000-5500 nm to pass.

16. The small packaged spectroscopic sensor unit according to claim 2, 6, 7, 8, or 15, wherein the photoelectric conversion elements of the two combinations are constituted of a linear type arrayed sensor.

17. The small packaged spectroscopic sensor unit according to claim 2, 6, 7, 8, or 15, wherein the photoelectric conversion elements of the two combinations are constituted of an area type arrayed sensor.

18. The small packaged spectroscopic sensor unit according to claim 2, 6, 7, 8, or 15, wherein one photoelectric conversion element of the two combinations employs a linear type silicon array sensor, and the other photoelectric conversion element employs an area type indium-gallium-arsine array sensor or an area type indium-antimony array sensor.

19. The small packaged spectroscopic sensor unit according to any of claims 1 to 18, wherein the optical path is formed in close contact without interspace between the light-emitting face of the optical fiber bundle and the opposing face of the light diffuser and between the opposing faces of the light diffuser and the continuous variable interference filter.

20. The small packaged spectroscopic sensor unit according to claims 1, 2, 3, 6, 7, 8, 9, 10, 11, 12, 13, 14, 15, 16, 17, 18, or 19, wherein the light-receiving face of the photoelectric conversion element is brought as near as possible to the continuous variable interference filter and fixed in the package.
